# EUROPÄISCHE PATENTSCHRIFT

(11) **EP 0 546 378 B1**
(45) Veröffentlichungstag und Bekanntmachung des Hinweises auf die Patenterteilung: **19.03.1997**
(21) Anmeldenummer: 92120055.6
(22) Anmeldetag: 25.11.1992
(51) Int. Cl.: G09G 3/34, H05B 39/04

(54) **Schaltungsanordnung für die Beleuchtung einer LCD-Anzeigevorrichtung in einem Kraftfahrzeug**
Illumination circuit for a LCD display in a motor vehicle
Circuit d'illumination d'un affichage à cristaux liquides dans un véhicule à moteur

(30) Priorität: 13.12.1991 DE 4141059
(43) Veröffentlichungstag der Anmeldung: 16.06.1993
(73) Patentinhaber: Blaupunkt-Werke GmbH, D-31132 Hildesheim (DE)
(72) Erfinder: Altmann, Albrecht, W-3226 Sibbesse (DE)

(56) Entgegenhaltungen:
- EP-A- 0 163 969
- DE-A- 3 031 093
- DE-A- 3 611 724
- DE-A- 3 920 847

## Beschreibung

Die Erfindung betrifft eine Schaltungsanordnung für die Beleuchtung einer LCD-Anzeigevorrichtung nach dem Oberbegriff des Anspruchs 1.

Für die Hinterleuchtung von LCDs sind erhebliche Lichtmengen erforderlich, um bei einer Transmission der LCD von etwa 20 % und der geforderten Gleichmäßigkeit der Hinterleuchtung (Streuscheibe) bei Tageslichteinfall noch einen genügend hohen Kontrast für eine ermüdungsfreie Ablesung zu erreichen. Fordert man z. B. eine Zeichenleuchtdichte von 90 cd/m², so müssen auf der hinter der LCD angeordneten Streuscheibe rd. 450 cd/m² aufgebracht werden. So hohe Leuchtdichten sind mit vertretbarem Aufwand nur mit Glühlampen zu realisieren. Glühlampen setzen jedoch nur einen relativ kleinen Anteil der zugeführten elektrischen Leistung in sichtbares Licht um. Der weitaus größere Teil wird im Infrarotbereich als unerwünschte Wärmestrahlung emittiert.

Eine Verringerung der Wärmeleistung bei gegebener Lichtleistung kann nur durch Verbesserung des Wirkungsgrades erreicht werden. Dieser hängt unter anderem von der Betriebsspannung ab. Bei niedriger Betriebsspannung kann der Glühfaden dicker und damit stabiler aufgebaut werden. Damit kann bei vergleichbarer Lebensdauer die Fadentemperatur und damit der Wirkungsgrad erhöht werden.

Da in einem Kraftfahrzeug eine Betriebsspannung von etwa 14 Volt zur Verfügung steht, ist eine Reihenschaltung von 2 Lampen bzw. Lampenzweigen denkbar. Die Lampen können wirtschaftlich jedoch nur mit Streuungen des Stromes von ± 10 % (bei Nennspannung) gefertigt werden. Wird eine statistische Fehlerverteilung angenommen (beherrschte Fertigung), so muß bei 2 Lampen mit ± 7 % gerechnet werden. Infolge der nichtlinearen Zusammenhänge erhält dann die Lampe mit dem bei Nennspannung kleineren Strom eine um etwa 13 % höhere Spannung, wodurch die Lebensdauer auf etwa 23 % des Sollwertes sinkt, während die Lebensdauer der anderen Lampe um etwa den Faktor 5 ansteigt. Die Reihenschaltung von Glühlampen wäre vertretbar, wenn in jeder Reihe nur Glühlampen mit möglichst gleichen Stromwerten eingesetzt würden. Dieses wäre jedoch sehr aufwendig und würde zudem einen Lampenwechsel komplizieren.

Aus der DE 31 47 619 C2 ist eine Schaltung für die Beleuchtung einer LCD-Anzeige in Kraftfahrzeugen bekannt, mit der die Lebensdauer der Glühbirnen zur Beleuchtung von LCD-Anzeigeeinheiten für Fahrzeuginstrumentierungen dadurch verlängert wird, daß eine Datenimpulsfolge innerhalb der Beschaltung der LCD-Anzeige gleichzeitig ein Einschaltsignal für eine die Einschaltdauer der Beleuchtung begrenzenden Schaltstufe auslöst. Zudem wurde vorgeschlagen, während der Einschaltdauer der Beleuchtung diese mit einer gepulsten Gleichspannung zu betreiben und mittels eines veränderbaren Tastverhältnisses der gepulsten Spannung die Helligkeit der Glühbirnen zu beeinflussen.

Es ist ferner bekannt, daß mit Wechselstrom betriebene Glühlampen eine wesentlich längere Lebensdauer erreichen können als mit Gleichstrom betriebene Glühlampen.

Der Erfindung liegt die Aufgabe zugrunde, eine gattungsgemäße Schaltungsanordnung für die Beleuchtung einer LCD-Anzeigevorrichtung zu schaffen, die es gestattet, daß handelsübliche Glühbirnen mit einer möglichst hohen Lebensdauer betrieben werden können.

Diese Aufgabe wird erfindungsgemäß durch die im Anspruch 1 angegebenen Maßnahmen gelöst.

Die mit der Erfindung erzielten Vorteile bestehen insbesondere darin, daß bei einer üblichen Lichtausbeute eine wesentliche Verlängerung der Lebensdauer der Glühlampen erreicht werden kann.

Vorteilhafte Ausgestaltungen der Schaltungsanordnung sind in den abhängigen Ansprüchen 2 bis 8 angegeben. Mit einer besonders vorteilhaften Ansteuerung der Gegentaktendstufe nach Anspruch 2 läßt sich eine gute Lichtleistung bei nur minimaler Verlustleistung erzielen. Bei einer Bemessung der Frequenz des Wechselspannungssignals nach Anspruch 3 lassen sich kleine und damit preiswerte Koppelkondensatoren verwenden. Mit einer Schaltungsmaßnahme nach Anspruch 5 läßt sich die gewünschte Helligkeit der Lampen ohne eine nennenswerte Erzeugung von Verlustwärme variabel einstellen. Durch die Verwendung einer integrierten Schaltung als Gegentakt-Endstufe nach Anspruch 7 läßt sich die Schaltungsanordnung raumsparend und preiswert gestalten.

Ein Ausführungsbeispiel der Erfindung ist in der Zeichnung dargestellt und wird im folgenden näher beschrieben.

Es zeigen
- Figur 1: eine Schaltungsanordnung für die Beleuchtung einer LCD-AnzeigeVorrichtung und
- Figur 2: die Spannungsverläufe der Steuerspannung S für die Gegentakt-Endstufe in Abhängigkeit vom Impulsbreiten-Modulationssignal PWMLMP und vom Ein-/Aus-Schaltsignal LK für die Lampen sowie den Spannungsverlauf des Rechteckspannungsgenerator-Signals CLKB in Abhängigkeit vom Impulsbreiten-Modulationssignal PWMLMP.

Der Ausgang einer mit einer Batteriespannungsklemme U_{B} des Kraftfahrzeugs verbundenen, als integrierte Schaltung ausgebildeten Transistor-Gegentakt-Endstufe IC1 ist über einen Koppelkondensator C1 mit den einen Anschlüssen von zwei parallel geschalteten Glühlampen L1, L2 verbunden, die mit ihren anderen Anschlüssen an Masse liegen. Der Ausgang der Gegentakt-Endstufe IC1 ist über eine Reihenschaltung aus einem Kondensator C2 und einem Widerstand R1 und außerdem über einen aus zwei Widerständen R3, R4 gebildeten Spannungsteiler mit Masse verbunden. Der Abgriff des Spannungsteilers R3/R4 ist über einen Kondensator C3 mit dem invertierenden Eingang der Gegentakt-Endstufe IC1 verbunden. Zwei NAND-Gatter IC2, IC3 und ein Inverter IC4, die als integrierte Schaltungen ausgebildet sind, bilden mit Widerständen R5, R6 und einem Kondensator C4 einen Rechteck-Generator. Der Ausgang des ersten NAND-Gatters IC2 ist mit den Eingängen des als Inverter geschalteten zweiten NAND-Gatters IC3 verbunden, dessen Ausgang mit dem Eingang des Inverters IC4 verbunden ist. Dem einen Eingang des ersten NAND-Gatters IC2 wird ein Impulsbreiten-Modulationssignal PWMLMP zugeführt, wobei der über den Widerstand R5 an Masse liegende andere Eingang einerseits über den Widerstand R6 mit dem Ausgang des Inverters IC4 und andererseits über den Kondensator C4 mit dem Ausgang des als Inverter geschalteten zweiten NAND-Gatters IC3 verbunden ist. Der Ausgang des zweiten NAND-Gatters IC3, der ein mäanderförmiges Signal CLKB mit gleichen Ein-/Aus-Zeiten und konstanter Frequenz liefert, ist mit dem einen Eingang eines als integrierte Schaltung ausgebildeten UND-Gatters IC5 verbunden, dessen Ausgang über einen Widerstand R7 und über einen mit diesem in Reihe geschalteten Kondensator C5 mit dem nichtinvertierenden Eingang der Gegentakt-Endstufe IC1 verbunden ist. Der über einen Widerstand R8 an Masse liegende Verbindungspunkt von Widerstand R7 und Kondensator C5 ist über einen Widerstand R9 mit dem Ausgang eines als integrierte Schaltung ausgebildeten NAND-Gatters IC6 verbunden. Dem einen Eingang dieses NAND-Gatters IC6 wird das Impulsbreiten-Modulationssignal PWMLMP zugeführt, während seinem anderen Eingang zusammen mit dem anderen Eingang des UND-Gatters IC5 ein Ein-/Aus-Schaltsignal LK für die Glühlampen L1, L2 zugeführt wird.

Die Frequenz des mäanderförmigen Signals CLKB kann relativ hoch gewählt werden. Bei einer Frequenz von beispielsweise 20 kHz lassen sich besonders kleine und preiswerte Koppelkondensatoren C1 verwenden. Mit der dem UND-Gatter IC5 zugeführten Schaltsignal LK wird der Signalfluß des mäanderförmigen Signals CLKB durchgeschaltet bzw. unterbrochen. Das NAND-Gatter IC6 bewirkt die Erzeugung eines mittleren Gleichstrompegels an der Eingangsklemme des Kondensators C5 in den Zeiträumen, in denen das zur Steuerung der Gegentakt-Endstufe dienende Steuersignal S nicht vorhanden ist. Damit werden unerwünschte Umladeeffekte der Kondensatoren vermieden. Sinnvoll ist die volle Durchsteuerung der Gegentakt-Endstufe IC1 mit dem mäanderförmigen Rechteckspannungssignal S, so daß als Wechselstrom-Ausgangsspannung an den Lampen als Spitzenwert die halbe Betriebsspannung U_{B}, vermindert um die U_{CE}-Restspannung der Endstufen-Transistoren, und damit also etwa 6 V_{eff} (für Rechteckspannung) zur Verfügung stehen.

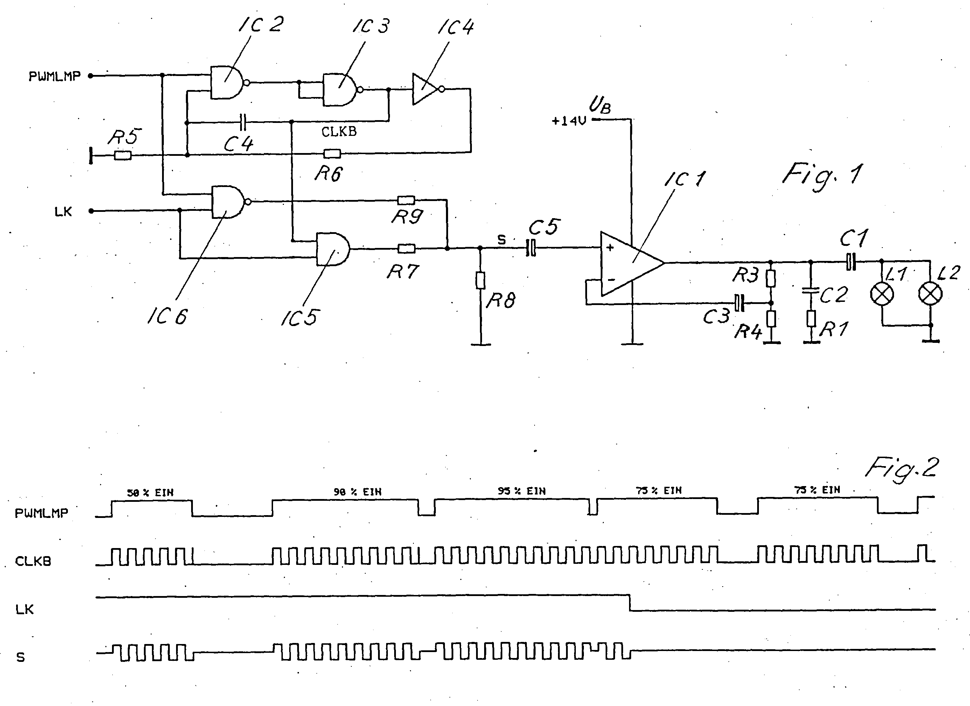

In der Figur 2 sind die Spannungsverläufe der auftretenden Signale in Abhängigkeit von fünf verschiedenen Tastverhältnissen des zur Einstellung der Helligkeit dienenden Impulsbreiten-Modulationssignals PWMLMP dargestellt.

## Patentansprüche

1. Schaltungsanordnung für die Beleuchtung einer LCD-Anzeigevorrichtung in einem Kraftfahrzeug, auf der diverse Informationen angezeigt werden, wobei die Beleuchtung mit Glühlampen erfolgt, deren Nennspannung etwa der halben Kraftfahrzeug-Betriebsspannung entspricht,
dadurch gekennzeichnet,
daß die Ausgangsklemme einer Transistor-Gegentaktendstufe (IC1) über eine aus einem Koppelkondensator (C1) und mindestens einer zur Beleuchtung vorgesehenen Glühlampe (L1, L2) bestehende Reihenschaltung mit Masse oder einer Betriebsspannungsklemme (U_{B}) verbunden ist und daß Mittel vorgesehen sind, um der Gegentakt-Endstufe (IC1) als Steuersignal (S) ein Wechselspannungssignal zuzuführen.

2. Schaltungsanordnung nach Anspruch 1,
dadurch gekennzeichnet,
daß als Steuersignal (S) ein mäanderförmiges Wechselspannungssignal vorgesehen ist, welches die Gegentaktendstufe (IC1) voll durchsteuert, so daß an der Lampe (L1) bzw. an ihr parallel geschalteten Lampen (L2) als Spitzenwert die halbe Kraftfahrzeug-Betriebsspannung (U_{B}), vermindert um die Kollektor-Emitter-Restspannung (U_{CE}) der Endstufen-Transistoren, zur Verfügung steht.

3. Schaltungsanordnung nach einem der Ansprüche 1 oder 2,
dadurch gekennzeichnet,
daß die Frequenz des Steuersignals (S) oberhalb des Hörbereichs liegt.

4. Schaltungsanordnung nach einem der Ansprüche 1 bis 3,
dadurch gekennzeichnet,
daß das Steuersignal (S) der Gegentaktendstufe (IC1) über ein von einem Ein-/Aus-Schaltsignal (LK) für die Lampe (L1) steuerbares UND-Gatter (IC5) zugeführt ist.

5. Schaltungsanordnung nach einem der Ansprüche 1 bis 4,
dadurch gekennzeichnet,
daß das von einem Rechteck-Generator (IC2, IC3, IC4) erzeugte Signal (CLKB) mittels eines vorgesehenen Gatters (IC2) derart getastet wird, daß die Einschaltintervalle einem dem Steuereingang des Gatters (IC2) zuführbaren Impulsbreiten-Modulationssignal (PWMLMP) entsprechen.

6. Schaltungsanordnung nach Anspruch 5,
dadurch gekennzeichnet,
daß das Gatter (IC2) aus einer als NAND-Gatter ausgebildeten integrierten Schaltung besteht, die Funktionsteil des Rechteck-Generators (IC2, IC3, IC4) ist.

7. Schaltungsanordnung nach einem der Ansprüche 1 bis 6,
dadurch gekennzeichnet,
daß die Gegentakt-Endstufe (IC1) als integrierte Schaltung ausgebildet ist, wobei dem nichtinvertierenden Eingang das Wechselspannungssignal (S) zugeführt ist und der invertierende Eingang über einen Kondensator (C3) mit dem Abgriff eines Spannungsteilers (R3, R4) verbunden ist, dessen Fußpunkt mit Masse und dessen Hochpunkt mit der Ausgangsklemme der Gegentakt-Endstufe (IC1) verbunden ist.

8. Schaltungsanordnung nach einem der Ansprüche 5 bis 7,
dadurch gekennzeichnet,
daß das mäanderförmige Signal (CLKB) dem einen Eingang eines UND-Gatters (IC5) zugeführt ist, dessen Ausgang über einen Widerstand (R7) und über einen mit diesem in Reihe geschalteten Kondensator (C5) mit dem Steuereingang der Gegentakt-Endstufe (IC1) verbunden ist, daß der über einen Widerstand (R8) an Masse liegende Verbindungspunkt von Widerstand (R7) und Kondensator (C5) über einen weiteren Widerstand (R9) mit dem Ausgang eines NAND-Gatters (IC6) verbunden ist, dessen einem Eingang das Impulsbreiten-Modulations(PWMLMP) zugeführt ist und dessen anderem Eingang, der mit dem anderen Eingang des UND-Gatters (IC5) verbunden ist, das Ein-/Aus-Schaltsignal (LK) für die Glühlampe(n) (L1, L2) zugeführt ist.

## Claims

1. Circuit arrangement for illuminating an LCD display in a motor vehicle, on which diverse items of information are displayed, the illumination being performed by incandescent lamps whose nominal voltage corresponds approximately to half the motor vehicle operating voltage, characterized in that the output terminals of a transistor push-pull output stage (IC1) is connected to frame or to an operating voltage terminal (U_{B}) via a series circuit comprising a coupling capacitor (C1) and at least one incandescent lamp (L1, L2) provided for illumination, and in that means are provided in order to feed an AC voltage signal to the push-pull output stage (IC1) as control signal (S).

2. Circuit arrangement according to Claim 1, characterized in that a meandering AC voltage signal is provided as control signal (S) and fully turns on the push-pull output stage (IC1), with the result that half the motor vehicle operating voltage (U_{B}), reduced by the collector-emitter residual voltage (U_{CE}) of the output stage transistors, is available as peak value at the lamp (L1) or at lamps (L2) connected in parallel therewith.

3. Circuit arrangement according to one of Claims 1 or 2, characterized in that the frequency of the control signal (S) is above the range of audibility.

4. Circuit arrangement according to one of Claims 1 to 3, characterized in that the control signal (S) is fed to the push-pull output stage (IC1) via an AND gate (IC5) which can be controlled by a switch-on/switch-off signal (LK) for the lamp (L1).

5. Circuit arrangement according to one of Claims 1 to 4, characterized in that the signal (CLKB) generated by a square-wave generator (IC2, IC3, IC4) is sampled by means of a provided gate (IC2) in such a way that the switch-on intervals correspond to a pulse-width modulation signal (PWMLMP) which can be fed to the control input of the gate (IC2).

6. Circuit arrangement according to Claim 5, characterized in that the gate (IC2) comprises an integrated circuit which is designed as a NAND gate and is the functional part of the square-wave generator (IC2, IC3, IC4).

7. Circuit arrangement according to one of Claims 1 to 6, characterized in that the push-pull output stage (IC1) is designed as an integrated circuit, the AC voltage signal (S) being fed to the non-inverting input, and the inverting input being connected via a capacitor (C3) to the tap of a voltage divider (R3, R4) whose low end is connected to frame and whose high end is connected to the output terminal of the push-pull output stage (IC1).

8. Circuit arrangement according to one of Claims 5 to 7, characterized in that the meandering signal (CLKB) is fed to one input of an AND gate (IC5) whose output is connected, via a resistor (R7) and via a capacitor (C5) connected in series therewith, to the control input of the push-pull output stage (IC1), and in that the tie point, connected to frame via a resistor (R8), of the resistor (R7) and capacitor (C5) is connected via a further resistor (R9) to the output of a NAND gate (IC6), one of whose inputs is fed the pulse-width modulation signal (PWMLMP), and whose other input, which is connected to the other input of the AND gate (IC5), is fed the switch-on/switch-off signal (LK) for the incandescent lamp(s) (L1, L2).

## Revendications

1. Circuit d'éclairage d'un dispositif d'affichage à cristaux liquides dans un véhicule à moteur, sur lequel sont affichées diverses informations, l'éclairage a lieu avec des lampes à incandescence dont la tension nominale correspond environ à la moitié de la tension de fonctionnement du véhicule à moteur,
caractérisé en ce que
la borne de sortie d'un étage final symétrique de transistor (ICI) est reliée à la masse ou à une borne de tension de fonctionnement (U_{B}) par l'intermédiaire d'un circuit consistant en un condensateur de couplage (C1) et au moins une lampe à incandescence (L1, L2) prévue pour l'éclairage et en ce que des moyens sont prévus pour amener un signal de tension alternatif comme signal de commande (S) à l'étage final symétrique (ICI).

2. Circuit selon la revendication 1,
caractérisé en ce que
comme signal de commande (S) on prévoit un signal de tension alternatif en forme de méandres qui utilise complètement l'étage final symétrique (ICI) de telle sorte que sur la lampe (L1) ou sur des lampes (L2) montées sur lui en parallèle, on dispose comme valeur de pointe de la moitié de la tension de fonctionnement de véhicule à moteur (U_{B}), diminuée de la tension résiduelle collecteur-émetteur (U_{CE}) des transistors d'étage final.

3. Circuit selon l'une quelconque des revendications 1 ou 2,
caractérisé en ce que
la fréquence du signal de commande (S) se trouve au-dessus de la plage audible.

4. Circuit selon l'une quelconque des revendications 1 à 3,
caractérisé en ce que
le signal de commande (S) de l'étage final symétrique (ICI) est amené au moyen d'une porte ET (IC5) qui peut être commandée par un signal (LK) de marche-arrêt de la lampe (L1).

5. Circuit selon l'une des revendications 1 à 4,
caractérisé en ce que
le signal (CLKB), produit du générateur rectangle (IC2, IC3, IC4) au moyen d'une porte prévue (IC2), est palpé de telle façon que les intervalles de mise en circuit correspondent à un signal de modulation d'impulsions en largeur (PWMLMP) qui peut être amené à l'entrée de commande de la porte (IC2).

6. Circuit selon la revendication 5,
caractérisé en ce que
la porte (IC2) consiste en un circuit intégré constitué sous la forme d'une porte NON-ET qui est la partie fonctionnelle du générateur rectangle (IC2, IC3, IC4).

7. Circuit selon l'une des revendications 1 à 6,
caractérisé en ce que
l'étage final symétrique (ICI) est constitué sous la forme d'un circuit intégré, le signal de tension alternatif (S) étant amené à l'entrée non inversante et l'entrée inversante est reliée au moyen d'un condensateur (C3) à la prise d'un diviseur de tension (R3, R4), dont la base est reliée à la masse et dont le sommet est relié à la borne de sortie de l'étage final symétrique (ICI).

8. Circuit selon l'une des revendications 5 à 7,
caractérisé en ce que
le signal en forme de méandres (CLKB) est amené à l'une des entrées d'une porte ET (IC5) dont la sortie est reliée au moyen d'une résistance (R7) et au moyen d'un condensateur (C5), monté en série avec celle-ci, à l'entrée de commande de l'étage final symétrique (ICI), et le point de liaison qui se trouve par l'intermédiaire d'une résistance (R8) à la masse est relié par une résistance (R7) et un condensateur (C5) au moyen d'une autre résistance (R9) à la sortie d'une porte NON-ET (IC6) dont le signal de modulation d'impulsions en largeur (PWMLMP) est amené à une entrée et dont le signal de marche-arrêt (LK) pour la lampe à incandescence ou les lampes à incandescence (L1, L2) est amené à son autre entrée qui est reliée à l'autre entrée de la porte ET (IC5).
